# EUROPÄISCHE PATENTANMELDUNG

(11) **EP 2 383 692 A1**
(43) Veröffentlichungstag der Anmeldung: **02.11.2011**
(21) Anmeldenummer: 11163535.5
(22) Anmeldetag: 21.04.2011
(51) Int. Cl.: G06Q 30/00

(54) **System zur Nutzung eines RFID Tags für die Kultivierung und Logistik von Pflanzen und den Erwerb von anderen Produkten oder Dienstleistungen**

(30) Priorität: 30.04.2010 AT 7342010
(71) Anmelder: TRECHIP, 8861 St. Georgen ob Murau (AT)
(72) Erfinder: Dulnigg, Walter, A-8020 Graz (AT)
(74) Vertreter: Röggla, Harald

(57) **Zusammenfassung**

Die Erfindung betrifft ein System (1, 14) zur Kultivierung und/oder für die Logistik der Auslieferung von Pflanzen (2), wobei an jeder Pflanze (2) ein Radio Frequency Identification (RFID) Tag (4) zur Identifikation der Pflanze (2) angebracht ist, der von einem RFID-Leser (7, 8) des Pflanzenbearbeitungssystems (1) auslesbar ist, wobei die Kultivierung und/oder die Logistik der Auslieferung der Pflanzen (2) entsprechend den RFID Tags (2) individualisiert erfolgt, wobei der RFID Tag (2) in einem Verkaufsetikette (3) an der Pflanze (2) vorgesehen ist, das eine bedruckbare Fläche (10) aufweist und wobei das Verkaufsetikette (3) nach dem Kauf der Pflanze (2) von der Pflanze (2) abnehmbar und zum Erwerb eines auf der bedruckbaren Fläche (10) visuell gekennzeichneten Produkts oder Dienstleistung in den Lesebereich eines RFID-Lesers (16) eines Kassensystems (14) zum Auslesen des RFID Tags (2) und hierbei zum Bezahlen des Produkts oder der Dienstleistung einbringbar ist, wobei eine RFID Kasse (11) des Systems (1, 14) Freischaltmittel (13) aufweist, die beim Kauf der Pflanze (2) zum Freischalten des einmaligen oder mehrmaligen vergünstigten Erwerbs des auf dem Verkaufsetikett (3) aufgedruckten Produkts ausgebildet sind, und wobei ein Zentralrechner (18) des Kassensystems (14) Überprüfungsmittel (19) aufweist, um die Originalität des Verkaufsetiketts (3) und die Berechtigung des Kaufs des auf dem Verkaufsetikett (3) aufgedruckten Produkts als gültig oder ungültig zu erkennen.

## Beschreibung

Die Erfindung betrifft ein System zur Kultivierung und/oder für die Logistik der Auslieferung von Pflanzen, wobei an jeder Pflanze ein Radio Frequency Identification (RFID) Tag zur Identifikation der Pflanze angebracht ist, der von einem RFID-Leser des Pflanzenbearbeitungssystems auslesbar ist, wobei die Kultivierung und/oder die Logistik der Auslieferung der Pflanzen entsprechend den RFID Tags individualisiert erfolgt Das Dokument EP 1 762 135 B1 offenbart ein solches System zur Kultivierung und für die Logistik der Auslieferung von Pflanzen, insbesondere von Christbäumen. An jedem Christbaum wird ein RFID Tag befestigt, der von einem RFID Leser einer Pflanzenbearbeitungsmaschine zur Identifikation des Chrisbaumes ausgelesen werden kann. Die Pflanzenbearbeitungsmaschine veranlasst beispielsweise das Düngen oder Schneiden der Christbäume je nach individuell detektiertem RFID Tag an den Christbäumen und düngt nur jene Christbäume, die in dem Jahr geschnitten und verkauft werden sollen. Für die Logistik des Schneidens und des Verladens der geschnittenen Chrisbäume und die Kontrolle der in den Container verladenen Christbäume werden ebenfalls die RFID Tags an den Christbäumen von einem RFID Lesers ausgelesen.

Der Erfindung liegt die Aufgabe zugrunde technischen Mittel zu schaffen, mit denen die bereits an den Pflanzen befestigten RFID Tags einer weiteren technischen Nutzung zugeführt werden können.

Erfindungsgemäß wird diese Aufgabestellung dadurch gelöst, dass der RFID Tag in einem Verkaufsetikette an der Pflanze vorgesehen ist, das eine bedruckbare Fläche aufweist, wobei das Verkaufsetikette nach dem Kauf der Pflanze von der Pflanze abnehmbar und zum Erwerb eines auf der bedruckbaren Fläche visuell gekennzeichneten Produkts oder Dienstleistung in den Lesebereich eines RFID-Lesers eines Kassensystems zum Auslesen des RFID Tags und hierbei zum Bezahlen des Produkts oder der Dienstleistung einbringbar ist, wobei eine RFID Kasse Freischaltmittel aufweist, die beim Kauf der Pflanze zum Freischalten des einmaligen oder mehrmaligen vergünstigten Erwerbs des auf dem Verkaufsetikett aufgedruckten Produkts ausgebildet sind, und wobei ein Zentralrechner des Kassensystems Überprüfungsmittel aufweist, um die Originalität des Verkaufsetiketts und die Berechtigung des Kaufs des auf dem Verkaufsetikett aufgedruckten Produkts als gültig oder ungültig zu erkennen.

Die für die Kultivierung und für die Logistik der Auslieferung von Pflanzen befestigten RFID Tags werden somit in bedruckten Verkaufsetiketten der Pflanzen vorgesehen. Die Bedruckung kennzeichnet nicht oder nicht nur die Pflanze sondern auch ein gänzlich anderes Produkt oder eine gänzlich andere Dienstleistung für die der Käufer der Pflanze einen Kaufanreiz erhalten soll. Der Kaufanreiz kann durch eine Vielzahl von möglichen Cross-Marketing-Modellen gegeben sein. So könnte der Kauf des auf dem Verkaufsetikette der Pflanze gekennzeichneten Produktes oder Dienstleistung ermäßigt oder gänzlich kostenlos möglich sein. Ebenso könnte beim Kauf eines Produktes oder einer Dienstleistung ein zweites Produkt oder eine zweite Dienstleistung ermäßigt oder kostenlos im Kaufpreis enthalten sein.

Die technische Realisierung und somit erfindungsgemäße Lösung der Aufgabe ist dadurch erreicht, dass Überprüfungsmittel und Freischaltmittel vorgesehen sind. Weiters ist erfindungsgemäß wesentlich, dass das den RFID Tag enthaltende bedruckbare Verkaufsetikett von der Pflanze abnehmbar ausgebildet ist und der RFID Tag des Systems zur Kultivierung und/oder Logistik der Auslieferung von Pflanzen und das Kassensystem zum Bezahlen des Produkts oder der Dienstleistung derart ausgebildet sind, dass der RFID Leser des Kassensystems den RFID Tag auslesen und ein dem gewählten Cross-Marketing-Modell entsprechender Erwerb des Produkts oder der Dienstleistung technisch ermöglicht ist. Es sei erwähnt, dass RFID Tags und RFID Leser für Systeme zum Management von Pflanzen aufgrund der geforderten Reichweite im 900 bis 1.000MHz Frequenzbereich angesiedelt sind. Kassensysteme in Geschäften sind auf der andere Seite im 13,56MHz Frequenzbereich realisiert sind und kommunizieren über gänzlich andere Protokolle, die dem ISO14.44 oder ISO15.693 Standard entsprechen.

Das Kassensystem des erfindungsgemäßen Systems verfügt über die Überprüfungsmittel, um die Originalität des Verkaufsetiketts zu Prüfen und um sicherzustellen, dass das Verkaufsetikett nur zu einem einmaligen vergünstigten Erwerb des Produkts oder der Dienstleistung verwendet werden kann. Weiters weist das Kassensystem Ermäßigungsmittel zur Ermittlung der Ermäßigung des Kaufpreises des Produkts oder der Dienstleistung auf, wobei die in den RFID Tag gespeicherten Pflanzdaten bezüglich der Qualität oder Länge der Pflanze bei der Ermittlung mit berücksichtigt werden.

Mit dem abgenommenen Verkaufsetikette kann der Käufer der Pflanze in das Geschäft oder die Verkaufsstelle des Produktes oder der Dienstleistung gehen und dort das auf dem Verkaufsetikette beworbene Produkt oder die Dienstleistung ermäßigt erwerben. Hierdurch ist der Vorteil erhalten, dass dem an der Pflanze angebrachten RFID Tag ein Mehrnutzen zukommt und somit eine Vielzahl an Geschäftsmodellen realisierbar sind. Weiters ist durch den Einsatz des RFID Tags im Verkaufsetikette der Vorteil erhalten, dass das Verkaufetikette nicht einfach kopiert werden kann, um beliebig oft das Produkt oder die Dienstleistung ermäßigt erwerben zu können.

Das Kassensystem des erfindungsgemäßen Systems zum Kauf der Pflanze verfügt weiters über die Freischaltmittel, die das Verkaufsetikette erst beim Bezahlen der Pflanze zum ermäßigten Kauf des auf dem Verkaufsetikette angegebenen Produkts oder Dienstleistung freischalten. Hierdurch ist verhindert, dass jemand die Verkaufsetiketten von der noch nicht gekauften Pflanze abnimmt, um das gekennzeichnete Produkt oder die Dienstleistung ermäßigt kaufen zu können.

Weitere vorteilhafte Ausgestaltungen des erfindungsgemäßen Systems werden im Folgenden anhand der Figuren näher erläutert.
Figur 1 zeigt ein System zur Kultivierung und für die Logistik der Auslieferung von Pflanzen, wobei die Verkaufsetiketten der Pflanzen zum ermäßigten Kauf eines Skipasses genutzt werden können.
Figur 2 zeigt in dem RFID Tag gemäß Figur 1 gespeicherte Daten.
Figur 3 zeigt ein Kassensystem mit mehreren über ein Computernetz verbundenen RFID-Kassen.

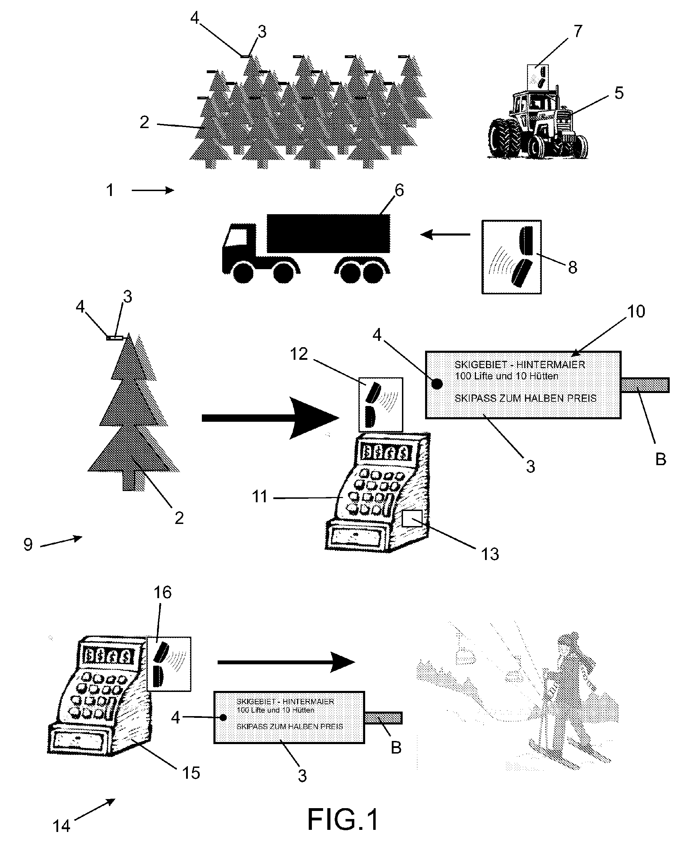

Figur 1 zeigt ein System 1 zur Kultivierung und für die Logistik der Auslieferung von Pflanzen, insbesondere Christbäumen 2. Einige Monate bevor die Christbäume 2 geschnitten werden sollen, werden die eine passende Größe und einen schönen Wuchs aufweisenden Christbäume 2 vom Christbaumproduzenten manuell ausgewählt und es wird je ein Verkaufsetikett 3 an den Christbäumen 2 angebracht. In jedem Verkaufsetikett 3 ist ein Radio Frequency Identification (RFID) Tag 4 enthalten, in dem individuelle Daten gespeichert sind, worauf nachfolgend noch näher eingegangen ist.

Die Christbäume 2 werden mittels eines Tracktors 5 bearbeitet. So können beispielsweise die Christbäume 2 gedüngt, die untersten Äste geschnitten oder auch bewässert werden. Auch das Schneider der Christbäume 2, der Transport der Christbäume 2 aus dem Wald zum Container auf dem LKW 6 erfolgt mittels des Tracktors 4. Um die Arbeit gezielt durchführen zu können, weist der Tracktor 5 einen RFID Leser 7 auf, der die Daten in den an den Christbäumen 2 befestigten RFID Tags 4 über einen Entfernung von einigen Metern kontaktlos ausliest. Da in jedem RFID Tag 4 eine den RFID Tag 4 eindeutig identifizierende Seriennummer des RFID Tags 4 gespeichert ist, erkennt der RFID Leser des Tracktors 5 jeden Christbaum 2 eindeutig und kann sämtliche Bearbeitungen individuell durchführen.

So können beispielsweise nur jene Christbäume 2 gedüngt werden, die für den Verkauf in diesem Jahr vorgesehen sind. Der RFID Leser 7 steuert hierfür eine an dem Tracktor 5 angebrachte Düngevorrichtung. Ebenso erfolgt das Schneiden der Christbäume 2 auf die Weise, dass die Seriennummern von zu schneidenden Christbäumen 2 in dem RFID Leser 7 gespeichert sind und eine Schneidevorrichtung des Tracktors 5 derart angesteuert wird, dass nur die ausgewählten Christbäume 2 geschnitten und zum Verladen zum LKW 6 befördert werden. Die Logistik des Verladens und Auslieferns der Christbäume 2 wird mit einem in der Hand haltbaren RFID Lesegerät 8 unterstützt, mit dem die RFID Tags 4 der auf dem LKW 6 aufgeladenen Christbäume 2 ausgelesen werden und somit die Ladung des LKWs 6 kontrolliert wird.

Die geschnittenen Christbäume 2 werden von dem LKW 6 auf einen Christbaumverkaufsplatz 9 eines Christbaumverkäufers gebracht. Der Christbaumverkäufer möchte die Christbäume 2 mit eigenen den Markennamen des Christbaumverkäufers tragenden Verkaufsetiketten 3 verkaufen, weshalb der Christbaumverkäufer seine je einen RFID Tag 4 enthaltenden Verkaufsetiketten 3 bereits Monate vor dem Verkauf an den Christbaumproduzenten geliefert hat. Auf einer Seite des Verkaufsetiketts 3 ist der Markenname des Christbaumverkäufers aufgedruckt. Der Christbaumverkäufer hat weiters mit einem Skiliftbetreiber vereinbart, dass die Käufer seiner Christbäume 2 den Skipass für sie Skilifte des Skiliftbetreibers vergünstigt erwerben können sollen. Eine entsprechende Werbung 10 für den Skiliftbetreiber ist auf der zweiten Seite des Verkaufsetikettes 3 aufgedruckt.

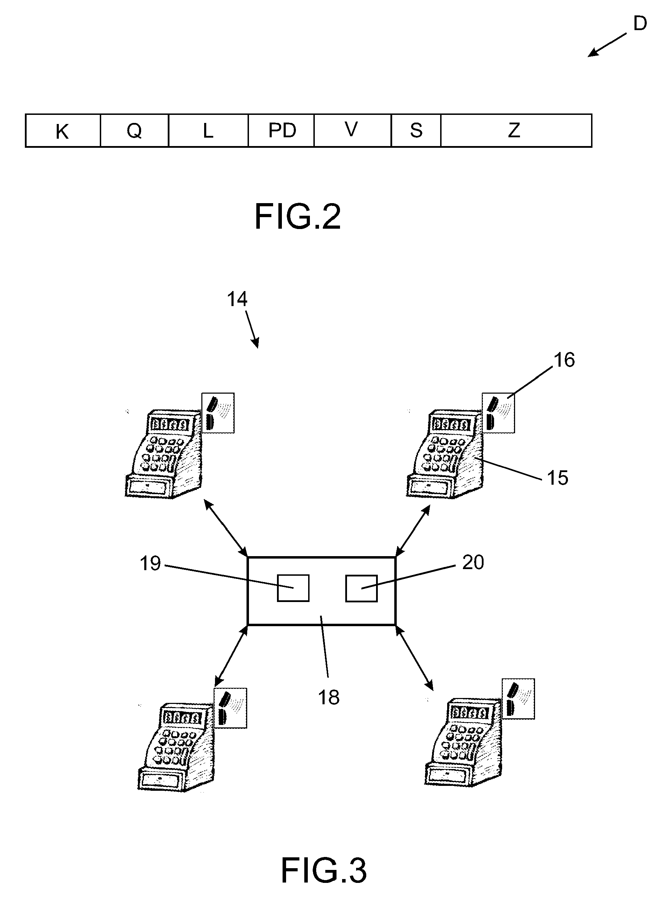

In Figur 2 sind symbolhaft die in den RFID Tags 4 gespeicherten Daten D dargestellt. Die gesamte Datenlänge beträgt 96 Bit, wobei folgende Daten gespeichert sind:
➢ Kundendaten K, die für den Christbaumproduzenten den Christbaumverkäufer kennzeichnen. Entsprechend der Kundendaten K können die Christbäume 2 auf den richtigen LKW 6 aufgeladen werden.
➢ Qualitätsdaten Q, die die Qualität, also beispielsweise den guten Wuchs, des Christbaumes kennzeichnen.
➢ Längendaten L, die die Länge des Christbaumes 2 kennzeichnen.
➢ Produkt oder Dienstleistungsdaten PD, die von dem Skiliftbetreiber angepasst an sein Kassensystem gewählt werden und das Verkaufsetikett 3 für den Skiliftbetreiber eindeutig kennzeichnen.
➢ Verschlüsselungsdaten V, die einige oder alle der vorstehenden Daten D gemäß einem 3DES oder MAC Verschlüsselungsalgorithmus verschlüsselt enthalten.
➢ Seriennummer S, des RFID Tags, die jeden RFID Tag einzigartig kennzeichnet.
➢ Zusatzdaten Z, in denen weitere applikationsabhängige Daten gespeichert werden können.

Der Christbaumverkäufer benutzt eine RFID Kasse 11, die einen RFID Leser 12 aufweist, mit dem die in dem RFID Tag 4 des Verkaufsetiketts 3 gespeicherten Daten D ausgelesen werden können. Die RFID Kasse 11 weist weiters Freischaltmittel 13 auf, die zum Freischalten des einmaligen oder mehrmaligen vergünstigten Erwerbs des auf dem Verkaufsetikett 3 aufgedruckten Produkts dem Skipass oder der Dienstleistung des Beförderns des Skifahrers auf den Berg freischaltet. Hierfür werden entweder die Produktdaten PD erstmals in dem RFID Tag 4 gespeichert oder aber die bereits gespeicherten Produktdaten PD so verändert, dass das Verkaufsetikett 3 beim Bezahlen des Skipasses als Original und auch als gültig erkannt wird.

Hierdurch ist der Vorteil erhalten, dass verhindert ist, dass ein angeblicher Käufer eines Christbaumes 2 auf dem Christbaumverkaufsplatz 9 ein oder mehrere Verkaufsetiketten 3 von den Christbäumen 2 abnehmen kann, um vergünstigte Skipässe zu kaufen. Diese Vergünstigung soll ja nur den tatsächlichen Käufern von Christbäumen 2 zugute kommen.

Wenn die Freischaltmittel 13 das Verkaufetikette 3 für den mehrmaligen vergünstigten Erwerb eines Skipasse freischaltet, dann kann in den Zusatzdaten Z oder in den Produktdaten PD ein Zähler in dem RFID Tag 4 mit abgespeichert werden, der die Anzahl der noch möglichen ermäßigten Käufe kennzeichnet. Hierdurch ist der Vorteil erhalten, dass ein Käufer eines besonders treuren Christbaumes 2 auch zum vergünstigten Kauf von zwei oder mehr Skipässen mit dem einen Verkaufsetikette 3 des Christbaumes 2 berechtigt werden kann.

Der Skiliftbetreiber hat ein in der Figur 3 dargestelltes Kassensystem 14, von dem in Figur 1 eine RFID Kasse 15 dargestellt ist. Über einen RFID Leser 16 liest die RFID Kasse 15 die in dem RFID Tag 4 gespeicherten Daten D aus. Ein Zentralrechner 18 des Kassensystems 14 weist Überprüfungsmittel 19 zur Überprüfung der Originalität des Verkaufsetiketts 3 auf, wobei die Überprüfungsmittel 19 einen Algorithmus abarbeiten, mit dem die von dem RFID Tag 4 ausgelesenen Verschlüsselungsdaten V (Kryptogramm) entschlüsselt und durch Vergleich mit den Produktdaten PD das Verkaufsetikett 3 als gültig oder ungültig erkannt wird. Weiters prüfen die Überprüfungsmittel 19, ob die Produktdaten PD und ein gegebenenfalls gespeicherter Zähler den Käufer zum Kauf eines vergünstigten Skipasses berechtigen.

Diese Informationen werden von dem Zentralrechner 18 an die RFID Kasse abgegeben, deren RFID Leser die Daten des Verkaufsetiketts eingelesen und zur Überprüfung an den Zentralrechner 18 gesandt haben. Der Zentralrechner 18 wird über einen abgeschlossenen Kauf des Skipasses zu einem bestimmten Verkaufsetikett informiert, worauf die Überprüfungsmittel 19 - bei einem nur einmal verwendbaren Verkaufsetikette 3 - die Seriennummer S des Verkaufsetiketts 3 als nicht mehr gültig speichern. Ebenso wäre es möglich, dass die RFID Kasse nach abgeschlossenem Kauf des Skipasses die in dem RFID Tag 4 gespeicherten Daten D verändert, wodurch das Verkaufsetikett 3 bei einem weiteren Versuch eines Kaufes des Skipasses von den Überprüfungsmitteln 19 als nicht mehr gültig erkannt werden würden. Hierdurch ist verhindert, dass ein und dasselbe Verkaufsetikett mehrfach zum Vergünstigen Kauf eines Skipasses verwendet werden kann, wenn dies nicht für dieses Verkaufsetikette 3 vorgesehen ist.

Der Systemrechner weist weiters Ermäßigungsmittel 20 auf, in denen in einer Tabelle zu den Qualitätsdaten Q und Längendaten L von Christbäumen 2 der jeweils gültige Ermäßigungs-Prozentsatz gespeichert ist. So erhält der Käufer eines Christbaumes 2 der besten Qualität Q = 1 und einer Länge L von 3,5 Metern eine Ermäßigungs-Prozentsatz von 50% und kann somit den Skipass zum halben Preis erwerben. Für den Kauf eines Christbaumes 2 mit nur mittlerer Qualität Q = 3 und einer Länge von 1,5 Metern erhält der Käufer nur einen Ermäßigungs-Prozentsatz von 20% und muss somit noch 80% des ursprünglichen Preises des Skipasses bezahlen.

Durch das Vorsehen der Ermäßigungsmittel 20 ist bezüglich des gewählten Cross-Marketing-Modells eine große Flexibilität gegeben. Der Skiliftbetreiber kann durch Änderung der Kriterien in den Ermäßigungsmitteln 20 die Ermäßigungs-Prozentsätze einfach ändern oder aber auch weitere Vergünstigungen ermöglichen. So wäre es vorstellbar, dass der Käufer eines Skipasses, der das Verkaufsetikett des Christbaumes beim Kauf des Skipasses in den Lesebereich des RFID Lesegeräts 16 der RFID Kasse 15 legt durch den Kauf eine Vergünstigung beim Ausleihen oder Kaufen der Skiausrüstung erhält. Entsprechende Produktdaten PD könnten in dem RFID Tag 4 gespeichert werden oder via Computernetz an den Zentralrechner des lokalen oder regionalen Geschäfts für Skiausrüstungen übertragen werden. Entsprechende Informationen könnten auf dem Kassenbeleg der RFID Kasse 15 ausgedruckt werden.

Um sicherzustellen, dass das Verkaufsetikette 3 zuverlässig - auch unter winterlichen Witterungsbedingungen - an dem Christbaum 2 befestigt werden kann und von dem Käufer des Christbaumes 2 einfach von dem Christbaum abgenommen werden kann weist das Verkaufetikette 3 Befestigungsmittel B auf. Die Befestigungsmittel B können durch eine Kunststofflasche mit Druckverschluss oder andere für diese Anforderungen geeignete Mittel gebildet sein.

Die RFID Leser 7 und 8 des müssen eine große Lesereichweite aufweisen, um auch in bis zu drei oder vier Metern Entfernung am Christbaum angebrachte RFID Tags 4 noch zuverlässig lesen zu können. Deshalb werden diese RFID Leser 7 und 8 üblicherweise gemäß dem Standard ISO18.000 im Frequenzbereich von 900 bis 1.000MHz ausgeführt. Die RFID Leser 12 und 16 der Kassensysteme des Christbaumverkäufers und des Skiliftbetreibers benötigen keine so große Lesereichweite müssen aber eine hohe Datensicherheit bei der Übertragung gewährleisten. Deshalb werden diese RFID Leser 12 und 16 gemäß dem ISO15.643 oder ISO14.443 im Frequenzbereich von 13,56MHz ausgeführt. RFID Leser für die Kontrolle des Skipasses bei dem jeweiligen Skilift erfordern wieder andere Voraussetzungen, weshalb dort zum Teil ebenfalls ISO18.000 oder andere Übertragungsstandards zum Einsatz kommen. Zur technischen Realisierung des erfindungsgemäßen Systems ist es nötig, dass der RFID Tag 2 mit all diesen RFID Lesern ausgelesen und teilweise auch beschrieben werden kann. Hierfür kann bei den RFID Lesern 12 und 16 ein Multistandard Lesegerät vorgesehen sein oder der RFID Tag kann als Multistandard Tag ausgebildet sein, wie dies beispielsweise im ISO18.092 (Near Field Communication Standard) beschrieben ist.

Gemäß dem vorstehend beschriebenen Ausführungsbeispiel wird das Verkaufsetikette 3 zum Nachweis der Berechtigung des ermäßigten Kaufs des Skipasses verwendet. Ebenso könnte vorgesehen sein, dass die Verkaufsetiketten 3 unmittelbar als Skipass verwendet werden können. Für diesen Fall müsste das Verkaufsetikette 3 vorerst beim Kauf des Christbaumes 2 für die Vergünstigung frei geschaltet werden und anschließend im Kassensystem 18 des Skiliftbetreibers als Skipass aktiviert oder frei geschaltet werden. Hierdurch ist vorteilhafterweise eine zusätzliche Verwendung der RFID Tags 3 gegeben.

Es kann erwähnt werden, dass eine Vielzahl von anderen Produkten oder Dienstleistungen mit dem erfindungsgemäßen System ermäßigt gekauft werden können. Insbesondere bieten sich Produkte oder Dienstleistungen an, die im Zusammenhang mit Winter (Wintermode, Ski- oder Snowboards, Rodeln,...) oder Weihnachten (Christbaumschmuck, Christbaumständer, Schokolade für den Christbaum,...) stehen. Ebenso könnte der Eintritt in eine Therme oder einen Vergnügungspark, eine Golfanlage oder ein vergünstigtes oder kostenloses Essen (z.B. bei McDonalds) mit dem Verkaufsetikett des Christbaumes bezahlt werden.

Es kann erwähnt werden, dass auch andere Pflanzen als Christbäume gemäß dem erfindungsgemäßen System kultiviert werden können und dass Verkaufsetikette an diesen Pflanzen ebenfalls zum Cross-Marketing verwendet werden könnten. Insbesondere die Anwendung in Baumschulen bietet sich an.

## Patentansprüche

1. System (1, 14) zur Kultivierung und/oder für die Logistik der Auslieferung von Pflanzen (2), wobei an jeder Pflanze (2) ein Radio Frequency Identification (RFID) Tag (4) zur Identifikation der Pflanze (2) angebracht ist, der von einem RFID-Leser (7, 8) des Pflanzenbearbeitungssystems (1) auslesbar ist, wobei die Kultivierung und/oder die Logistik der Auslieferung der Pflanzen (2) entsprechend den RFID Tags (2) individualisiert erfolgt, **dadurch gekennzeichnet, dass**
der RFID Tag (2) in einem Verkaufsetikette (3) an der Pflanze (2) vorgesehen ist, das eine bedruckbare Fläche (10) aufweist, wobei das Verkaufsetikette (3) nach dem Kauf der Pflanze (2) von der Pflanze (2) abnehmbar und zum Erwerb eines auf der bedruckbaren Fläche (10) visuell gekennzeichneten Produkts oder Dienstleistung in den Lesebereich eines RFID-Lesers (16) eines Kassensystems (14) zum Auslesen des RFID Tags (2) und hierbei zum Bezahlen des Produkts oder der Dienstleistung einbringbar ist, wobei eine RFID Kasse (11) des Systems (1, 14) Freischaltmittel (13) aufweist, die beim Kauf der Pflanze (2) zum Freischalten des einmaligen oder mehrmaligen vergünstigten Erwerbs des auf dem Verkaufsetikett (3) aufgedruckten Produkts ausgebildet sind, und wobei ein Zentralrechner (18) des Kassensystems (14) Überprüfungsmittel (19) aufweist, um die Originalität des Verkaufsetiketts (3) und die Berechtigung des Kaufs des auf dem Verkaufsetikett (3) aufgedruckten Produkts als gültig oder ungültig zu erkennen.

2. System (1, 14) gemäß Anspruch 1, **dadurch gekennzeichnet, dass** mit dem RFID Tag (4) die Pflanze (2) kennzeichnende Pflanzdaten insbesondere bezüglich der Qualität (Q) und/oder der Länge (L) der Pflanze (2) gespeichert und von dem RFID-Leser (7, 8) des Pflanzenbearbeitungssystems (1) auslesbar sind und dass zusätzlich mit dem RFID Tag (4) die Originalität des Verkaufsetikettes (3) gewährleistende im System (14) nur einmalig vorhandene verschlüsselte Produktdaten zum Erwerb des Produktes oder der Dienstleistung gespeichert und von dem RFID-Leser (16) des Kassensystems (14) auslesbar sind, wobei die Überprüfungsmittel (19) des Kassensystems (14) zur Überprüfung der Originalität des Verkaufsetikettes (3) zum Entschlüsseln und Verarbeiten der Produktdaten aufweist.

3. System (1, 14) gemäß Anspruch 2, **dadurch gekennzeichnet, dass** das Kassensystem (14) über ein Computernetz vernetzte RFID-Kassen (15) aufweist, und die Überprüfungsmittel (19) zum Sicherstellen ausgebildet sind, dass ein Verkaufsetikette (3) auch nur zum einmaligen Erwerb des Produktes oder der Dienstleistung bei einer der RFID-Kassen (15) verwendbar ist.

4. System (1, 14) gemäß einem der vorherigen Ansprüche, **dadurch gekennzeichnet, dass** gemäß dem System (1, 14) Christbäume (2) aufgezogen und verarbeitet werden und mit dem Verkaufsetikette (3) des Christbaumes (2) ein Skipass in einem auf dem Verkaufsetikette (3) gekennzeichneten Skigebiet insbesondere ermäßigt erwerbbar ist, wobei in dem Kassensystem (14) Ermäßigungsmittel (20) vorgesehen sind, mit denen ein Ermäßigungssatz speicherbar ist, der insbesondere von den im RFID Tag (4) gespeicherten Pflanzdaten (Q, L) abhängt.

5. System (1, 14) gemäß einem der vorherigen Ansprüche, **dadurch gekennzeichnet, dass** der RFID Tag (4) zum Erwerb der Pflanze (2) in den Lesebereich eines RFID-Lesers (12) der RFID Kasse (11) einbringbar ist, und dass die Freischaltmittel (13) der RFID Kasse (11) zum Freischalten eines ein- oder mehrmaligen vergünstigten Erwerbs des auf der bedruckten Fläche des Verkaufsetikettes (3) gekennzeichneten Produkts oder Dienstleistung ausgebildet sind.

6. Verkaufsetikette (3) für ein System (1, 14) gemäß einem der vorherigen Ansprüche, **dadurch gekennzeichnet, dass** in dem Verkaufsetikette (3) ein RFID Tag (4) vorgesehen ist, in dem sowohl Pflanzdaten (Q, L) als auch verschlüsselte Produktdaten speicherbar sind, und dass das Verkaufsetikette (3) eine bedruckbare Fläche (10) und Befestigungsmittel (B) zum lösbaren Befestigen an einer Pflanze (2) aufweist.

7. Verkaufsetikette (3) gemäß Anspruch 6, **dadurch gekennzeichnet, dass** das Verkaufsetikett (3) sowohl bei der Kultivierung und/oder für die Logistik der Auslieferung von Pflanzen (2) als auch unmittelbar zur Nutzung des durch die verschlüsselten Produktdaten gekennzeichneten Produkts oder der Dienstleistung, insbesondere als Skipass nutzbar ist.

8. Verfahren zur Kultivierung und/oder für die Logistik der Auslieferung von Pflanzen (2), wobei an jeder Pflanze (2) ein Radio Frequency Identification (RFID) Tag (4) zur Identifikation der Pflanze (2) angebracht ist, der von einem RFID-Leser (7, 8) des Pflanzenbearbeitungssystems (1) ausgelesen wird, wobei die Kultivierung und/oder die Logistik der Auslieferung der Pflanzen (2) entsprechend den RFID Tags (4) individualisiert erfolgt, **dadurch gekennzeichnet, dass**
der RFID Tag (4) in einem Verkaufsetikette (3) an der Pflanze (2) vorgesehen ist, das eine bedruckbare Fläche (10) aufweist, wobei das Verkaufsetikette (3) nach dem Kauf der Pflanze (2) von der Pflanze (2) abgenommen und zum Erwerb eines auf der bedruckbaren Fläche (10) visuell gekennzeichneten Produkts oder Dienstleistung in den Lesebereich eines RFID-Lesers (16) eines Kassensystems (14) zum Auslesen des RFID Tags (4) und hierbei zum Bezahlen des Produkts oder der Dienstleistung eingebracht wird, wobei mit Freischaltmitteln (13) einer RFID Kasse (11) beim Kauf der Pflanze (2) der einmalige oder mehrmalige vergünstigte Erwerb des auf dem Verkaufsetikett (3) aufgedruckten Produkts freigeschaltet wird, und wobei Überprüfungsmittel (19) eines Zentralrechners (18) die Originalität des Verkaufsetiketts (3) und die Berechtigung des Kaufs des auf dem Verkaufsetikett (3) aufgedruckten Produkts als gültig oder ungültig erkennen.

9. Verfahren gemäß Anspruch 7, wobei das Verkaufsetikett (3) unmittelbar zur Nutzung des Produkts oder der Dienstleistung, insbesondere als Skipass genutzt wird.
